# FASCICULE DE BREVET EUROPEEN

(11) **EP 1 413 771 B1**
(45) Date de publication et mention de la délivrance du brevet: **23.05.2007**
(21) Numéro de dépôt: 03292610.7
(22) Date de dépôt: 21.10.2003
(51) Int. Cl.: F04D 29/68, F04D 27/02, F04D 29/16, F01D 11/12, F01D 11/08, F01D 5/14

(54) **Carter, compresseur, turbine et turbo moteur à combustion comprenant un tel carter**
Gehäuse, Verdichter, Turbine und Triebwerk mit einem solchen Gehäuse
Casing, compressor, turbine and gas turbine engine having such casing

(30) Priorité: 22.10.2002 FR 0213144
(43) Date de publication de la demande: 28.04.2004
(73) Titulaire: SNECMA, 75015 Paris (FR)
(72) Inventeur: Le Biez, Philippe, 91210 Draveil (FR); Lebret, Yann, 77950 Maincy (FR); Mons, Claude, 77176 Savigny Le Temple (FR)
(74) Mandataire: Cardy, Sophie Marie

(56) Documents cités:
- EP-A- 0 716 218
- DE-B- 1 022 745
- FR-A- 1 533 120
- US-A- 3 425 665
- US-A- 5 161 942

## Description

L'invention concerne un carter supportant des séries aubes fixes entre lesquelles sont disposées des séries d'aubes mobiles en rotation autour d'un axe longitudinal, l'extrémité radialement externe desdites aubes mobiles étant proche de la face interne du carter, notamment un carter utilisé dans un turboréacteur d'aviation.

Egalement, la présente invention se rapporte à la réalisation d'un compresseur, en particulier de type axial, notamment un compresseur fonctionnant à basse pression, comportant un carter tel que mentionné précédemment.

Les compresseurs de ce type, utilisés notamment dans les turboréacteurs, sont constitués d'un rotor comprenant, soit une succession de disques séparés empilés les uns à la suite des autres, soit un tambour unique destiné à recevoir les séries d'aubes des différents étages.

Classiquement, ce rotor comporte des saignées réalisées par usinage afin de former entre deux étages voisins un espace dans lequel s'intercalent les aubes des étages statoriques solidarisées à une partie fixe présentant un carter.

Ce carter forme un tronçon de la limite radialement externe de la veine le long de laquelle l'air circule dans la turbomachine. Un carter perforé localement sur lequel est rapportée une structure nid d'abeille est divulgué dans le document FR-A-1533120.

De manière habituelle, les aubes mobiles sont solidarisées de façon individuelle au tambour au niveau de logements, répartis régulièrement et en nombre égal à celui des aubes, dont la forme est déterminée pour coopérer par complémentarité de forme avec le pied de l'aube, ce qui assure l'immobilisation radiale, par exemple par une fixation du type par queue d'aronde. En ce qui concerne l'immobilisation en translation, notamment axiale, du pied de l'aube par rapport à son logement, elle est assurée le plus souvent séparément pour chaque aube par un système à bille, goupille, agrafe, flasque, entretoise etc.

Pendant le fonctionnement d'un turboréacteur, en particulier pour les moteurs civils actuels, compte tenu des températures des pressions atteintes par l'air chaud, il est nécessaire d'assurer une fonction de régulation en cas de pompage.

On rappelle que le pompage est un phénomène que l'on cherche à éviter au sein du moteur puisqu'il se traduit par des oscillations brutales de la pression d'air et du débit d'air, qui soumettent les aubes à des contraintes mécaniques considérables pouvant conduire à leur fragilisation, voire à leur rupture. Ce phénomène intervient notamment en tête d'aube, au niveau de la couche limite d'air présente entre la tête de l'aube et le carter et se traduit localement par des poches de pression plus faible, formant ce que l'on dénomme de la cavitation.

Actuellement cette fonction de régulation du pompage est assurée par des vannes de décharge qui permettent d'aspirer cette couche limite, ce qui dégrade le régime du moteur, tout en assurant également l'évacuation de l'eau et/ou de la glace ayant pu pénétrer dans le moteur, en particulier dans le cas des compresseurs fonctionnant à haute pression. Toutefois, ces vannes de décharges sont relativement coûteuses et fragiles, elles nécessitent une alimentation en énergie électrique ainsi qu'une maintenance stricte.

Il a aussi été proposé de percer le carter afin de former des fuites contrôlées : cette solution est toutefois très néfaste en termes de rendement énergétique puisqu'elle met directement le flux d'air en relation avec l'extérieur de la veine.

La présente invention a pour objectif de fournir un carter permettant de s'affranchir ou de minimiser le recours aux vannes de décharge tout en évitant une perte énergétique trop importante.

La présente invention a donc pour objectif de permettre réduire localement le phénomène de pompage, en augmentant la marge de pompage actuelle, sans toutefois diminuer le rendement du moteur.

A cet effet, selon la présente invention, le carter comporte un élément principal et, au moins en regard de l'une des séries d'aubes mobiles, un ensemble comportant une plaque réalisée en matériau alvéolaire à cellules tubulaires (ou nids d'abeilles) et un revêtement disposé sur la face de la plaque tournée en direction opposée aux aubes, de sorte que lesdites cellules sont ouvertes en direction des aubes, ledit revêtement étant muni de trous débouchant dans des cellules de la plaque formant des cellules ouvertes, ledit revêtement refermant les autres cellules de la plaque formant des cellules fermées, une cavité étant formée entre ladite plaque et la face interne dudit élément principal.

De cette manière, on comprend que par la présence des cellules ouvertes de la plaque en nids d'abeilles, de structure légère et résistante, on permet une évacuation de l'air de la couche limite dans la cavité afin d'éviter le phénomène de pompage. Egalement un tel agencement est facile à mettre en oeuvre du fait de l'adaptabilité et de la facilité de montage des plaques en nids d'abeilles.

Cette solution présente aussi l'avantage supplémentaire, de par la présence de la cavité située entre ladite plaque et la face interne dudit élément principal, de permettre la création d'une re-circulation de cet air comprimé capté dans la couche limite en face et/ou en aval d'un étage d'aubes, ce qui d'une part permet de limiter le débit de fuite et d'autre part permet de venir augmenter la pression en amont d'un étage d'aubes.

Globalement, grâce à l'agencement selon la présente invention, il est possible d'aspirer la couche limite susceptible d'engendrer le phénomène de pompage, sans dégrader le régime du moteur grâce à la re-circulation d'air précitée qui permet d'améliorer la stabilité du système dont le régime est proche de la ligne de fonctionnement optimale.

De préférence, ledit ensemble comporte en outre une feuille de métal percée par des orifices et située entre ledit revêtement et ladite face interne dudit élément principal, ladite cavité étant formée entre ladite feuille et ladite face interne dudit élément principal, lesdits orifices étant au moins en partie situés dans le prolongement des cellules ouvertes.

Cette feuille de métal percée contribue à orienter le flux d'air prélevé dans la couche limite et réinjecté plus en amont ; elle permet également de limiter les turbulences dans la cavité et donc d'améliorer les performances acoustiques.

De préférence, lesdites cellules sont toutes orientées selon une même direction principale qui soit est perpendiculaire audit axe longitudinal soit forme un angle aigu par rapport audit axe longitudinal pris dans le sens opposé à l'écoulement du fluide, et en particulier de l'air.

Un tel angle permet de modifier et donc de maîtriser les conditions de prélèvement et de re-circulation de l'air comprimé au moyen d'une structure alvéolaire orientée à contre-courant.

Selon une autre disposition préférentielle, lesdites cellules ouvertes sont situées au moins en partie en amont et en aval de ladite série d'aubes mobiles : de cette manière, on garantit une re-circulation de la couche limite située en aval de la roue (série d'aubes mobiles) dont on souhaite améliorer le comportement. Cette disposition peut se cumuler avec la possibilité de placer des cellules ouvertes également dans le tronçon prolongeant la série d'aubes mobiles considérée et/ou d'autres séries d'aubes mobiles.

Selon un mode de réalisation préférentiel, au moins certaines des cellules fermées de ladite plaque sont remplies d'un matériau d'usure : cette solution ajoute une fonction « abradable » à la plaque. De cette manière, en effet, on réalise également par le dit ensemble du carter selon la présente invention, la fonction dite « abradable » en tête d'aubes, qui correspond à l'utilisation d'un matériau d'usure susceptible d'être arasé ou érodé, c'est-à-dire d'être usé par le frottement de la tête d'aube.

De préférence, ledit matériau d'usure contient l'une des matières appartenant au groupe formé des résines, des silicones, des résines de silicone.

Selon une autre disposition pouvant se cumuler avec la disposition du paragraphe précédent, ledit matériau d'usure contient des billes creuses, notamment des billes de verre.

La présente invention porte aussi sur un compresseur, de préférence axial, en particulier fonctionnant à basse pression, comprenant, à titre de stator, un carter tel que défini précédemment.

La présente invention porte également sur un turbo moteur à combustion, en particulier un turboréacteur, comprenant un compresseur du type précité.

Enfin, la présente invention porte aussi sur une turbine comprenant un carter du type précité.

D'autres avantages et caractéristiques de l'invention ressortiront à la lecture de la description suivante faite à titre d'exemple et en référence aux dessins annexés dans lesquels :
- la figure 1 montre une vue en section longitudinale schématique d'un turboréacteur,
- la figure 2 montre une demi vue en section partielle de la partie avant d'un turboréacteur, avec la soufflante et un compresseur basse pression équipé d'un carter selon la présente invention,
- la figure 3 est une vue en plan d'un tronçon du carter selon la présente invention avec l'extrémité libre des aubes en section transversale,
- la figure 4 est une coupe en section selon la direction IV-IV de la figure 3, et
- la figure 5 montre de manière agrandie l'extrémité libre d'une aube et la partie adjacente du carter selon la présente invention.

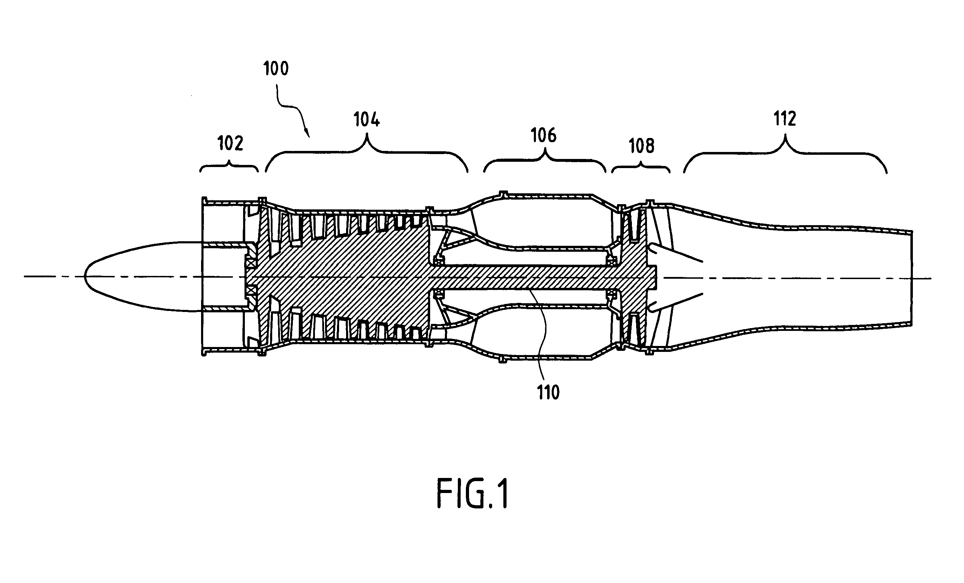

Comme il ressort de la figure 1, montrant de manière schématique un turbo réacteur axial 100 et sur laquelle les parties mobiles ont été hachurées, les principaux organes sont, d'amont en aval, la soufflante 102, le compresseur 104, la chambre de combustion 106, la turbine 108 équipée de son arbre 110 et le canal d'éjection 112.

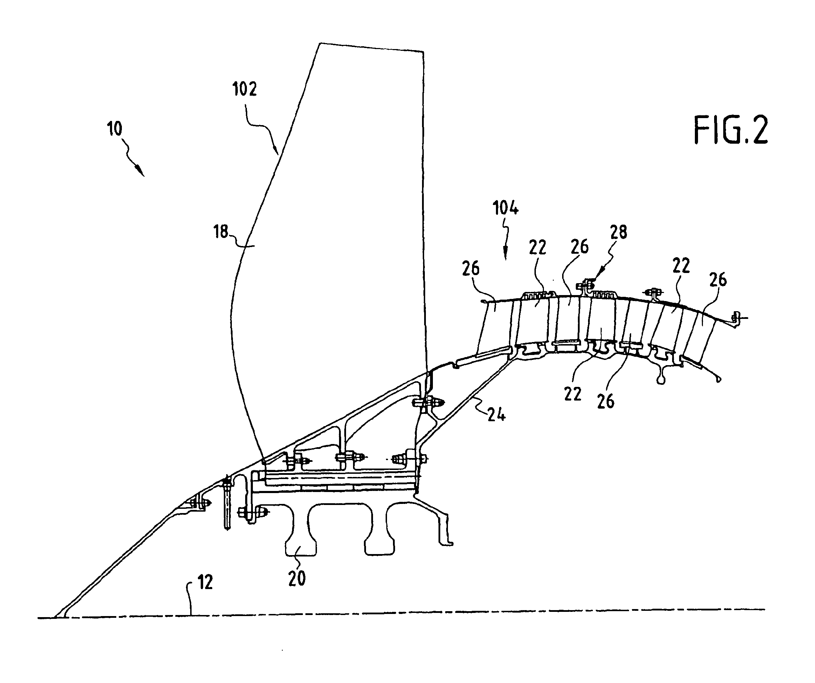

Sur la figure 2 est représentée de manière agrandie une portion de la figure 1.

Plus précisément, la figure 2 montre la section d'une moitié de la partie avant 10 d'un turboréacteur du même type que celui de la figure 1, cette moitié étant située d'un côté de l'axe longitudinal 12 formant l'axe de symétrie de révolution des différents éléments, en particulier des différents éléments mobiles du turboréacteur.

Sur cette figure 2, on peut voir plus précisément, parmi les différents éléments disposés axialement autour de l'axe longitudinal 12 et formant la structure conventionnelle d'un tel turboréacteur, la soufflante 102 ("fan") et le compresseur 104 fonctionnant à basse pression.

La soufflante 102 comprend une série d'aubes 18 s'étendant radialement qui sont montées sur un disque annulaire 20 : une seule de ces aubes 18 apparaît sur la figure 2. Il est entendu que le disque 20 et les aubes 18 sont montés en rotation autour de l'axe longitudinal 12 du turboréacteur.

Sur la figure 2, le sens d'écoulement du flux d'air détermine la direction amont (partie gauche de la figure 1) de la direction aval (partie droite de la figure 1).

Il est entendu que pour des raisons de clarté, les autres éléments conventionnels d'un tel turboréacteur, en particulier les éléments situés plus en aval que le compresseur 104 et les éléments situés radialement plus à l'extérieur par rapport à l'axe longitudinal 12, ne sont pas représentés.

Le compresseur 104 comprend plusieurs séries d'aubes mobiles 22 en rotation qui sont montés sur un disque, ou tambour 24, solidaire du disque 20 de la soufflante 102.

Sur la figure 2, il apparaît trois séries d'aubes mobiles 22 entre lesquelles sont montées cinq séries d'aubes fixes 26 montées sur un carter 28.

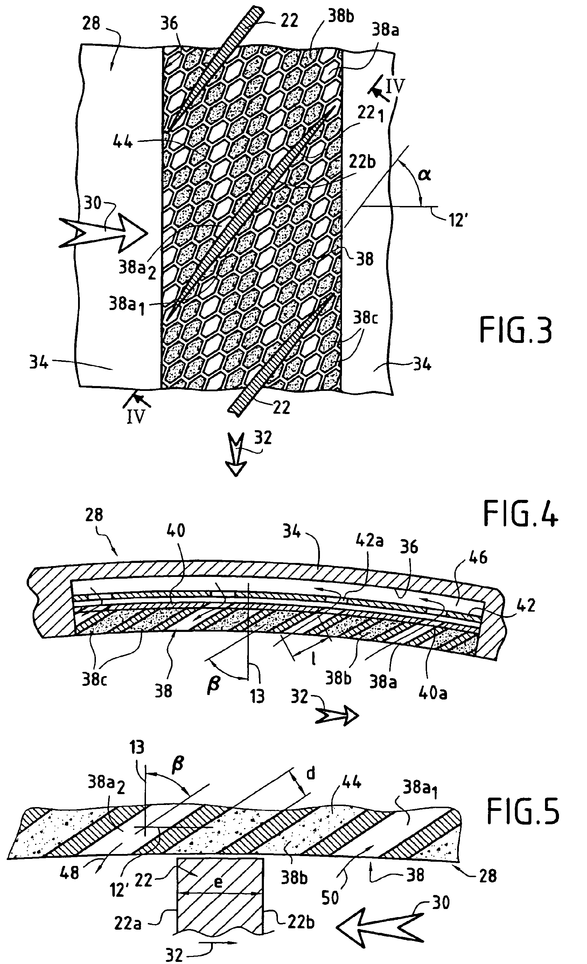

La structure de ce carter 28 conforme à la présente invention va maintenant être décrite de manière plus complète en relation avec les figures 3 à 5.

D'une manière générale, le sens de l'écoulement de l'air est signalé par la flèche 30, tandis que la flèche 32 indique le sens de rotation des aubes 22 du compresseur 104.

Le carter 28 comporte un élément principal 34 formant la structure porteuse du carter 28 et séparant la veine du flux d'air de l'extérieur : cet élément principal 34 correspond donc essentiellement à la forme d'un carter classique de l'art antérieur.

Cet élément principal 34 comporte des rainures annulaires 36 réalisées en regard de chaque série d'aubes 22 que l'on souhaite traiter.

Comme on peut le voir sur la figure 3, ces rainures annulaires 36 présentent une longueur, dans la direction de l'axe longitudinal 12, légèrement supérieure à la longueur des aubes 22 de long de cet axe longitudinal 12 (sur la figure 3 est représenté en 12' un axe qui est parallèle à l'axe longitudinal 12 de la figure 2).

La rainure annulaire 36 sert de logement à un ensemble comprenant une plaque 38 réalisée en matériau alvéolaire à cellules tubulaires (nid d'abeilles réalisé à partir de plaques déployées et collées entre elles), un revêtement 40 formant une peau disposée sur la face de la plaque 38 tournée en direction opposée aux aubes 22 et une feuille de métal 42 disposée entre le revêtement 40 de la plaque 38 et le fond de la rainure annulaire 36.

Le revêtement 40 comporte des trous 40a disposés dans le prolongement de certaines des cellules de la plaque 38 qui constituent de la sorte des cellules ouvertes 38a. Toutes les cellules de la plaque 38 ne sont toutefois pas ouvertes dans le fond de la plaque 38 par des trous 40a de sorte qu'il subsiste des cellules fermées 38b.

En fait, ces cellules fermées 38b sont refermées par le revêtement 40 à leur extrémité dirigée de manière opposée aux aubes 22, tandis que leur extrémité dirigée en direction des aubes 22 est ouverte.

Avantageusement, on garnit ces cellules fermées 38b d'un matériau d'usure 44 permettant ainsi à la plaque 38 de remplir un rôle d'élément "abradable" c'est-à-dire qui est, le cas échéant, érodé ou arasé par l'extrémité libre des aubes 22 (voir figure 5).

Comme on peut le voir également sur la figure 4, la feuille de métal 42 est percée par des orifices 42a situés dans le prolongement des trous 40a du revêtement 40. Toutefois, la position, la répartition et la fréquence des orifices 42a peuvent être modifiées pour que la feuille de métal percée 42 participe à l'amélioration des performances acoustiques.

En effet, comme il apparaît sur la figure 4, l'agencement qui vient d'être décrit conduit à la formation d'une cavité morte 46, disposée entre le fond de la rainure 36 et la feuille de métal 42, et qui réalise une fonction de re-circulation d'air comme il sera décrit plus précisément par la suite.

La plaque 38 comporte donc des rangées 38c de cellules 38a, 38b, l'une de ces rangées 38c étant visible en section sur la figure 4. Ces rangées de cellules 38c sont orientées de manière à former un angle α avec l'axe 12' parallèle à l'axe longitudinal 12.

Cet angle α, avantageusement aigu, peut varier entre 0° et 90°, de préférence entre 15° et 45° et il est de préférence sensiblement égal à 30°. En fait, cet angle α sera choisi proche de l'angle de calage des coupes, c'est-à-dire l'angle formé entre l'axe longitudinal 12 (axe de rotation du turboréacteur) et la droite située en tête d'aube et passant par le bord d'attaque et le bord de fuite.

Egalement, les cellules 38a, 38b de la plaque 38 sont inclinées d'un angle β par rapport à un axe normal 13 qui est orthogonal à l'axe longitudinal 12 et parallèle à un plan radial ou transversal du compresseur 104.

Cet angle β peut varier entre -90° et +90° (cas du rainurage circonférentiel), et il est dépendant du vecteur vitesse en bout d'aube.

Comme il apparaît sur la figure 3, les cellules 38a, 38b présentent une section en forme d'hexagone mais il est entendu que d'autres formes peuvent bien entendu être utilisées parmi lesquelles une forme rectangulaire, flexible, multi-ondes, hexagonale renforcée, cylindrique, sinusoïdale, carrée, cruciforme, hexagonale décalée, carrée raidie (voir notamment en page 7 de la norme française PR L 19-000 concernant une vue d'ensemble des matériaux alvéolaires à cellules tubulaires (M.A.C.T.) pour le domaine aéronautique et espace).

De manière classique, les feuilles utilisées pour réaliser la plaque 38 en nid d'abeilles sont réalisées en alliage d'aluminium, en alliage de titane, d'acier ou d'autres métaux, ou encore en matériau composite et non métallique.

De préférence, on utilisera une plaque 38 réalisée en alliage d'aluminium ou en « Nomex » (marque déposée), c'est-à-dire dans une fibre textile aramide thermostable, constituée de poly(métaphénylène isophtalamide).

La longueur I des cellules 38a, 38b peut également être modifiée en fonction du résultat que l'on souhaite obtenir. Il faut comprendre que la cavité morte 46 permet une recirculation de l'air correspondant à une entrée et à une sortie d'air par les canaux que constituent les cellules ouvertes 38a.

En particulier, comme il ressort de la figure 5, lors de la rotation des aubes 22, l'extrémité libre de ces aubes 22 balaye les différentes cellules de la plaque 38, ce qui expose les cellules ouvertes 38a à des conditions de pression différentes en fonction de la position de l'aube 22. Ainsi, sur la figure 5, la face 22a de l'aube 22 correspond au côté de basse pression, tandis que la face 22b correspond au côté soumis à une plus haute pression, la flèche 32 rappelant le sens de rotation de l'aube 22.

Par exemple si l'on considère la cellule ouverte 38a₁ et l'aube 22₁ de la figure 3, dans sa position correspondant à une position initiale, la cellule ouverte 38a₁ est située du côté de haute pression 22b de l'aube 22₁ mais lorsque l'aube avance en rotation dans la direction de la flèche 32, la cellule ouverte 38a₁ va ensuite être soumise à une pression correspondant à la pression basse de la face 22a correspondant à la position ultérieure de l'aube 22₁, comme l'était la cellule 38a₂, dans la position initiale de l'aube 22₁.

De cette manière, comme il est montré sur la figure 5, la cellule ouverte 38a₂ initialement soumise à une pression correspondant à celle du côté à haute pression 22b de l'aube 22 engendre la sortie d'un jet d'air (flèche 48) du côté de la face soumise à basse pression 22a de l'aube 22 lorsque l'aube passe sur cette cellule 38a₂. du fait de l'entrée préalable (flèche 50) d'un flux d'air du côté de la face soumise à haute pression 22b de l'aube 22.

Le même phénomène va se produire au niveau de la cellule ouverte 38a₁ au niveau de laquelle, dans la position initiale illustrée sur la figure 5, de l'air pénètre (flèche 50) puisque cette cellule ouverte 38a₁ est disposée du côté de la face 22b de l'aube soumise à une haute pression.

Parmi les autres paramètres pouvant être modifiés, il convient de noter que la dimension moyenne d (voir figure 5) de la section des cellules 38a, 38b est de préférence sensiblement égale à l'épaisseur e des aubes 22.

De préférence, la longueur I des cellules de la plaque 38 est au moins égale à la dimension d mais de préférence égale à 2 à 10 fois cette dimension d .

De cette manière, on comprend que l'on prévient le phénomène de pompage en déchargeant une partie de l'air contenu dans la couche limite située entre l'extrémité libre de chaque aube 22 et la plaque 38 du fait de la re-circulation d'air (flèches 50 et 48) qui vient d'être exposée ci-avant.

De cette manière, on comprend que les fuites d'air au niveau de la tête de l'aube ne sont pas perdues mais réinjectées de sorte qu'il n'y a pas de perte de rendement que l'on peut parler de fuites contrôlées permettant de réguler les conditions de pompage.

En relation avec la fonction "abradable", le matériau d'usure 44 peut être constitué d'une multitude de matériaux différents parmi lesquels on privilégie des matières appartenant au groupe formé des résines, des silicones, des résines de silicone, avantageusement l'addition de billes creuses, notamment des billes de verre.

Des résines chargées de billes creuses peuvent être utilisées, comme le produit "minnesota Ec 3524". Parmi les résines silicones chargées de billes de verres creuses, on peut noter l'utilisation d'un produit "RTV 147/148".

Sur la figure 3, pour chaque rangée 38c de cellules 38a, 38b, on a prévu une cellule ouverte 38a sur trois cellules mais il est entendu que d'autres répartitions peuvent être utilisées.

Egalement, sur la figure 3, on a prévu un décalage entre la disposition des cellules ouvertes 38a et des cellules fermées 38b toutes les sept rangées de cellules 38c mais il est entendu que d'autres dispositions peuvent être choisies.

Egalement, on rappelle les paramètres d'optimisation du traitement du carter 28 : la densité des cellules 38a, 38b de la plaque 38, l'étirement des cellules (la forme de leur section), l'angle formé par rapport à la veine (lié à l'angle β), le rapport entre le nombre de cellules ouvertes 38a sur le nombre de cellules fermées 38b, la position et l'orientation des cellules ouvertes et des cellules fermées, la taille de la section des cellules ouvertes 38a et la sélection de la position des cellules ouvertes 38a par rapport aux cellules fermées 38b, l'épaisseur de la plaque de nid d'abeilles 38...

Egalement, il faut noter que le positionnement de l'ensemble 38, 40, 42 dans la rainure 36 peut s'étendre à une ou plusieurs séries d'aubes 22, à des séries d'aubes adjacentes ou bien sur seulement certaines séries d'aubes.

Egalement, on peut prévoir que l'élément principal 34 présente une rainure 36 sur toute sa longueur de sorte que tout le compresseur 104 et toutes les séries d'aubes 22 qu'il comporte sont traitées par un ensemble 38, 40, 42 unique permettant la recirculation d'air sur chaque grille.

Enfin, il ressort de ce qui précède qu'outre la fonction "abradable", l'ensemble 38, 40, 42 permet fondamentalement d'assurer une stabilisation des conditions de pression de la couche limite d'air au niveau du compresseur 104.

D'une manière générale, on comprend que l'utilisation d'une plaque réalisée en matériau alvéolaire à cellules tubulaires (ou nids d'abeilles) est d'utilisation facile et adaptable compte tenu de toutes les possibilité de matériaux pouvant être utilisés, et des formes (inclinaison et forme de la section) et des tailles (longueur et taille de la section) disponibles pour les cellules.

## Revendications

1. Carter (28) s'étendant autour d'un axe longitudinal (12), la face interne du carter (28) étant destinée à venir à proximité de l'extrémité radialement externe d'aubes mobiles (22), comportant un élément principal (34) et, au moins un ensemble logé dans une rainure annulaire (36) du carter (28) et comportant une plaque (38) réalisée en matériau alvéolaire à cellules tubulaires et un revêtement (40) disposé sur la face radialement externe de la plaque (38), de sorte que lesdites cellules (38a, 38b) sont ouvertes sur la face interne du carter (28), ledit revêtement (40) étant muni de trous (40a) débouchant dans des cellules de la plaque pour former des cellules ouvertes (38a), ledit revêtement (40) refermant les autres cellules de la plaque pour former des cellules fermées (38b), une cavité (46) étant formée entre ladite plaque (38) et la face interne dudit élément principal (34), de telle sorte que la cavité (46) comporte une entrée et une sortie d'air par des cellules ouvertes (38a) différentes, ce par quoi on obtient une circulation d'air entre la face radialement interne de la plaque (38) et la cavité (46).

2. Carter (28) selon la revendication 1, **caractérisé en ce que** ledit ensemble comporte en outre une feuille de métal (42) percée par des orifices (42a) et située entre ledit revêtement (40) et ladite face interne dudit élément principal (34), ladite cavité (46) étant formée entre ladite feuille (42) et ladite face interne dudit élément principal (34), lesdits orifices (42a) étant au moins en partie situés dans le prolongement des cellules ouvertes (38a).

3. Carter (28) selon l'une quelconque des revendications précédentes, **caractérisé en ce que** lesdites cellules (38a, 38b) sont orientées selon une direction principale formant un angle aigu (α) par rapport audit axe longitudinal (12) pris dans le sens opposé à l'écoulement.

4. Carter (28) selon la revendication 3, **caractérisé en ce que** ledit angle (α) est compris entre 0° et 90°, de préférence entre 15° et 45°, et de préférence sensiblement égal à 30°.

5. Carter (28) selon l'une quelconque des revendications précédentes, **caractérisé en ce que** lesdites cellules ouvertes (38a) sont situées au moins en partie en amont et en aval de ladite série d'aubes mobiles (22).

6. Carter (28) selon la revendication 1 ou 2, **caractérisé en ce qu'**au moins certaines des cellules fermées (38b) de ladite plaque sont remplies d'un matériau d'usure (44).

7. Carter (28) selon la revendication 6, **caractérisé en ce que** ledit matériau d'usure (44) contient l'une des matières appartenant au groupe formé des résines, des silicones, des résines de silicone.

8. Carter (28) selon la revendication 6, **caractérisé en ce que** ledit matériau d'usure (44) contient des billes creuses, notamment des billes de verre.

9. Compresseur (104) axial, en particulier fonctionnant à basse pression, comprenant, à titre de stator, un carter (28) selon l'une quelconque des revendications précédentes.

10. Turbo moteur à combustion, en particulier turboréacteur, comprenant un compresseur (104) selon la revendication 9.

11. Turbine (108) pour turboréacteur comprenant un carter (28) selon l'une quelconque des revendications 1 à 8.

12. Assemblage comportant un carter (28) selon l'une quelconque des revendications 1 à 8, des séries d'aube fixes (18; 26) et des séries d'aubes mobiles (22), **caractérisé en ce que** le carter supporte lesdites séries d'aubes fixes (18 ; 26) entre lesquelles sont disposées lesdites séries d'aubes mobiles (22) en rotation autour dudit axe longitudinal (12), ledit ensemble étant en regard d'au moins l'une des séries d'aubes mobiles (22), lesdites cellules (38a, 38b) étant ouvertes en direction des aubes (22).

13. Turbine pour turboréacteur comprenant un assemblage selon la revendication 12.

14. Turbomachine comprenant un assemblage selon la revendication 12.

## Claims

1. A casing (28) extending about a longitudinal axis (12), the inside face of the casing (28) being designed to come close to the radially outer ends of the moving blades (22), the casing comprising a main element (34) and at least one assembly housed in an annular groove (36) of the casing (28) and comprising a plate (38) made of a cellular material having tubular cells and a covering (40) disposed on the radially outer face of the plate (38) so that said cells (38a, 38b) are open on the inside face of the casing (28), said covering (40) being provided with holes (40a) that open out Into cells of the plate so as to form open cells (38a), said covering (40) closing other cells of the plate so as to form closed cells (38b), a cavity (46) being formed between said plate (38) and the inside face of said main element (34), such that said cavity (46) includes an air inlet and outlet via different open cells (38a) whereby air is enabled to recirculate between the radially inside face of the plate (38) and the cavity (46).

2. A casing (28) according to claim 1, **characterised in that** said assembly further comprises a sheet (42) of metal pierced by orifices (42a) situated between said covering (40) and said inside face of said main element (34), said cavity (46) being formed between said sheet (42) and said inside face of said main element (34), at least some of said orifices (42a) being situated in line with the open cells (38a).

3. A casing (28) according to any one of the preceding claims, **characterised in that** said cells (38a, 38b) are oriented in a main direction forming an acute angle (α) relative to said longitudinal axis (12) and measured in the opposite direction to the flow.

4. A casing (28) according to claim 3, **characterised in that** said angle (α) lies in the range 0° to 90°, preferably in the range 15° to 45°, and is preferably substantially equal to 30°.

5. A casing (28) according to any one of the preceding claims, **characterised in that** at least some of said open cells (38a) are situated upstream and others are situated downstream from said series of moving blades (22).

6. A casing (28) according to claim 1 or claim 2, **characterised in that** at least some of the closed cells (38b) in said plate are filled with a wear material (44).

7. A casing (28) according to claim 6, **characterised in that** said wear material (44) contains a material selected from the group formed by: resins, silicones, and silicone resins.

8. A casing (28) according to claim 6, **characterised in that** said wear material (44) contains hollow beads, in particular glass beads.

9. An axial compressor (104), in particular a low pressure compressor, and including as its stator a casing (28) according to any one of the preceding claims.

10. A combustion turboshaft engine, in particular a turbojet engine, including a compressor (104) according to claim 9.

11. A turbojet turbine (108) including a casing (28) according to any one of claims 1 to 8.

12. An assembling including a casing (28) according to any one of claims 1 to 8, series of stationary blades (18; 26) and series of moving blades (22), the assembly being **characterised in that** the casing supports said series of stationary blades (18; 26) in between which are disposed said series of blades (22) that are movable in rotation about said longitudinal axis (12), said assembly facing at least one of the series of moving blades (22), said cells (38a, 38b) being open towards the blades (22).

13. A turbojet turbine including an assembling according to claim 12.

14. A turbomachine including an assembling according to claim 12.

## Patentansprüche

1. Gehäuse (28), das sich um eine Längsachse (12) herum erstreckt, wobei die Innenseite des Gehäuses (28) dazu bestimmt ist, sich dem radial äußeren Ende von Rotorschaufeln (22) anzunähern, wobei das Gehäuse (28) ein Hauptelement (34) und mindestens eine Gesamtanordnung aufweist, die in einer ringförmigen Rille (36) des Gehäuses (28) Aufnahme findet und eine Platte (38) aus wabenförmigem Material mit rohrförmigen Zellen sowie eine Verkleidung (40) an der radial äußeren Seite der Platte (38) umfasst, so dass diese Zellen (38a, 38b) zur Innenseite des Gehäuses (28) offen sind, wobei die Verkleidung (40) mit Löchern (40a) versehen ist, die in Zellen der Platte münden, um offene Zellen (38a) zu bilden, wobei die Verkleidung (40) die anderen Zellen der Platte umschließt, um geschlossene Zellen (38b) zu bilden, wobei zwischen dieser Platte (38) und der Innenseite des Hauptelements (34) ein Hohlraum (46) dergestalt gebildet ist, dass dieser Hohlraum (46) einen Lufteinlass und einen Luftauslass durch verschiedene offene Zellen (38a) aufweist, wodurch eine Luftzirkulation zwischen der radial inneren Seite der Platte (38) und dem Hohlraum (46) erzielt wird.

2. Gehäuse (28) nach Anspruch 1,
**dadurch gekennzeichnet,**
**dass** diese Gesamtanordnung ferner eine Metallfolie (42) aufweist, durch die Öffnungen (42a) gebohrt sind und die sich zwischen der Verkleidung (40) und der genannten Innenseite des Hauptelements (34) befindet, wobei der Hohlraum (46) zwischen dieser Folie (42) und dieser Innenseite des Hauptelements (34) gebildet ist, wobei sich die Öffnungen (42a) zumindest teilweise in der Verlängerung der offenen Zellen (38a) befinden.

3. Gehäuse (28) nach einem der vorherigen Ansprüche,
**dadurch gekennzeichnet,**
**dass** diese Zellen (38a, 38b) in einer Hauptrichtung ausgerichtet sind, die einen spitzen Winkel (α) mit der Längsachse (12) bildet, entgegengesetzt zur Strömungsrichtung gesehen.

4. Gehäuse (28) nach Anspruch 3,
**dadurch gekennzeichnet,**
**dass** dieser Winkel (α) zwischen 0° und 90° beträgt, vorzugsweise zwischen 15° und 45°, und idealerweise ungefähr 30° beträgt.

5. Gehäuse (28) nach einem der vorherigen Ansprüche,
**dadurch gekennzeichnet,**
**dass** diese offenen Zellen (38a) sich zumindest teilweise vor und hinter der Reihe von Rotorschaufeln (22) befinden.

6. Gehäuse (28) nach Anspruch 1 oder 2,
**dadurch gekennzeichnet,**
**dass** zumindest manche der geschlossenen Zellen (38b) der genannten Platte mit einem Verschleißmaterial (44) gefüllt sind.

7. Gehäuse (28) nach Anspruch 6,
**dadurch gekennzeichnet,**
**dass** dieses Verschleißmaterial (44) einen der Stoffe enthält, die zur Gruppe der Harze, der Silikone oder der Silikonharze gehören.

8. Gehäuse (28) nach Anspruch 6,
**dadurch gekennzeichnet,**
**dass** dieses Verschleißmaterial (44) hohle Kugeln enthält, insbesondere Glaskugeln.

9. Axialer Verdichter (104), insbesondere Niederdruckverdichter, der als Stator ein Gehäuse (28) nach einem der vorherigen Ansprüche aufweist.

10. Verbrennungsturbotriebwerk, insbesondere ein Turbotriebwerk mit einem Verdichter (104) nach Anspruch 9.

11. Turbotriebwerks-Turbine (108) mit einem Gehäuse (28) nach einem der Ansprüche 1 bis 8.

12. Zusammenbau, der ein Gehäuse (28) nach einem der Ansprüche 1 bis 8, Reihen von Statorschaufeln (18; 26) und Reihen von Rotorschaufeln (22) umfasst,
**dadurch gekennzeichnet,**
**dass** das Gehäuse diese Reihen von Statorschaufeln (18; 26) trägt, zwischen denen diese Reihen von Rotorschaufeln (22) angeordnet sind, die sich in Drehbewegung um die genannte Längsachse (12) befinden, wobei sich diese Gesamtanordnung gegenüber mindestens einer der Reihen von Rotorschaufeln (22) befinden, wobei die Zellen (38a, 38b) zu den Schaufeln (22) hin offen sind.

13. Turbotriebwerks-Turbine (108) mit einem Zusammenbau nach Anspruch 12.

14. Turbotriebwerk mit einem Zusammenbau nach Anspruch 12.
